# EUROPEAN PATENT APPLICATION

(11) **EP 4 399 988 A1**
(43) Date of publication of application: **17.07.2024**
(21) Application number: 22866292.0
(22) Date of filing: 03.08.2022
(51) Int. Cl.: A24F 40/90, A24F 40/46, A24F 40/50

(54) **AEROSOL GENERATION APPARATUS, CONTROL METHOD, AND COMPUTER-READABLE STORAGE MEDIUM**

(30) Priority: 08.09.2021 CN 202111050604
(71) Applicant: Shenzhen Merit Technology Co., Ltd., Shenzhen, Guangdong 518105 (CN)
(72) Inventor: ZHANG, Xingfu, Shenzhen, Guangdong 518105 (CN); LIN, Qiaoshi, Shenzhen, Guangdong 518105 (CN)
(74) Representative: Herrero & Asociados, S.L.
(86) International application number: PCT/CN2022/110078
(87) International publication number: WO 2023/035818

(57) **Abstract**

An aerosol generation apparatus, a control method, and a computer-readable storage medium. The aerosol generation apparatus comprises: a heating element (11), which is used to atomize an aerosol matrix (17); at least one energy storage unit (12), which is used to provide electrical energy for the heating element (11) so as to enable the heating element (11) to operate; a charging unit (13), which is connected to the energy storage unit (12) and used to connect to an external power supply to charge the energy storage unit (12); and a control unit (14), which is connected to the energy storage unit (12) and the charging unit (13) and used to detect the electrical energy stored in the energy storage unit (12), and on the basis of the electrical energy stored in the energy storage unit (12), control the charging unit (13) to charge the energy storage unit (12). The energy storage unit (12) replaces a lithium battery in supplying power to a heater, thereby improving the safety of power supply; and by means of detecting any one of the voltage, energy and capacity of the energy storage unit (12), the control unit controls the charging unit (13) to charge the energy storage unit (12).

## Description

### CROSS-REFERENCES TO RELATED APPLICATIONS

The present application claims priority to Chinese patent application No. 202111050604.3, filed on September 8, 2021, which is herein incorporated by reference in its entirety.

### TECHNICAL FIELD

The present disclosure relates to the technical field of electronic atomizing technologies, and in particular to an aerosol-generating device, a control method and a computer-readable storage medium.

### BACKGROUND

An aerosol-generating device includes a heater and a power supply assembly. The power supply assembly provides electrical energy to the heater. The heater converts the electrical energy into thermal energy to heat and atomize an aerosol-forming substrate to form an aerosol to be inhaled by a user. Currently, aerosol-generating devices on the market are mainly divided into two types. One type is an electronic atomizing device that heats a liquid aerosol-forming substrate, and another type is an electronic atomizing device that heats a solid aerosol-forming substrate at low temperature without burning it.

Currently, a power supply of the aerosol-generating device is a lithium-ion battery. The lithium-ion battery may be overcharged or over-discharged when being used. When being overcharged, a positive electrode of the battery may deintercalate too many lithium ions. Long-term overcharging may cause the crystal lattice to collapse, thereby irreversibly reducing the capacity of the lithium-ion battery, and even causing the internal pressure of the battery to increase, battery deformation, and liquid leakage, etc. When being over-discharged, excessive intercalated lithium ions may be fixed in the crystal lattice and are not able to be released again, resulting in a shortened battery life or even damage and deformation of the battery. Moreover, during the charging process, the energy of the lithium-ion battery is not able to be accurately detected, resulting in the charging time of the lithium-ion battery being too long.

In summary, with respect to the aerosol-generating device, especially a portable low-temperature heat-not-burn integrated aerosol-generating device, the lithium-ion battery is adopted to power the heater, which has the disadvantages of low safety, short life, and long charging time.

### SUMMARY OF THE DISCLOSURE

The present disclosure provides an aerosol-generating device, a control method, and a computer readable storage medium. An energy storage unit replaces a lithium battery to power a heating element, improving the safety of power supply; and by detecting the electrical energy of the energy storage unit, a charging unit is controlled to charge the energy storage unit, which to some extent reduces the charging time.

In order to solve the above problem, a first technical solution provided by the present disclosure is an aerosol-generating device. The aerosol-generating device includes a heating element, at least one energy storage unit, a charging unit, and a control unit. The heating element is configured to heat an aerosol-forming substrate for forming aerosol. The at least one energy storage unit is configured to provide electrical energy to the heating element to power on the heating element to work. The charging unit is connected to the energy storage unit and configured to connect an external power supply to charge the energy storage unit. The control unit is connected to the energy storage unit and the charging unit, and configured to detect the electric energy stored in the energy storage unit and control the charging unit to charge the energy storage unit based on the detected electric energy stored in the energy storage unit.

In some embodiments, the control unit detects any one parameter of the voltage, the energy, and the capacity of the energy storage unit, and controls the charging unit to charge the energy storage unit based on the voltage, the energy, or the capacity of the energy storage unit.

In some embodiments, the control unit controls the charging unit to charge the energy storage unit based on the voltage of the energy storage unit within a first preset time period; or the control unit controls the charging unit to charge the energy storage unit based on the energy of the energy storage unit within a second preset time period; or the control unit controls the charging unit to charge the energy storage unit based on the capacity of the energy storage unit within a third preset time period.

In some embodiments, the charging unit is configured to apply a constant current charging mode during the first preset time period, the second preset time period and the third preset time period, and is configured to charge the energy storage unit based on the constant current charging mode.

In some embodiments, the control unit controls the charging unit to charge the energy storage unit based on the voltage of the energy storage unit within a first preset energy interval; or the control unit controls the charging unit to charge the energy storage unit based on the energy of the energy storage unit within a second preset energy interval; or the control unit controls the charging unit to charge the energy storage unit based on the capacity of the energy storage unit within a third preset energy interval.

In some embodiments, the control unit controls the charging unit to charge the energy storage unit based on the voltage of the energy storage unit within a first preset charge amount interval; or the control unit controls the charging unit to charge the energy storage unit based on the energy of the energy storage unit within a second preset charge amount interval; or the control unit controls the charging unit to charge the energy storage unit based on the capacity of the energy storage unit within a third preset charge amount interval.

In some embodiments, the charging unit is configured to apply a constant current charging mode, and the control unit detects any one parameter of the voltage, the energy, and the capacity of the energy storage unit, and controls the charging unit to charge the energy storage unit based on the detected voltage, the detected energy, or the detected capacity such that the voltage of the energy storage unit reaches a preset voltage value.

In some embodiments, the charging unit is configured to apply the constant voltage charging mode in response to the voltage of the energy storage unit reaching the preset voltage value, and the control unit controls the charging unit to charge the energy storage unit based on the detected energy, or the detected capacity such that the charging current of the charging unit reaches a preset charging current.

In some embodiments, the charging unit includes a charging unit external interface. The charging unit external interface is configured to connect to an external power supply.

In some embodiments, the control unit includes a voltage detection unit and a current detection unit. The voltage detection unit is connected to the energy storage unit, and configured to detect the voltage of the energy storage unit, such that the control unit controls the charging unit to charge the energy storage unit based on the voltage of the energy storage unit. The current detection unit is connected to the energy storage unit, and configured to detect the energy or the capacity of the energy storage unit, such that the control unit controls the charging unit to charge the energy storage unit based on the energy or the capacity of the energy storage unit.

In order to solve the above problem, a second technical solution provided by the present disclosure is a control method for an aerosol-generating device, and the aerosol-generating device includes a heating element, an energy storage unit and a charging unit. The control method includes the following operations: detecting the electrical energy stored in the energy storage unit; and controlling the charging unit to charge the energy storage unit based on the electric energy stored in the energy storage unit to allow the energy storage unit to provide electric energy to the heating element.

In some embodiments, the controlling the charging unit to charge the energy storage unit based on the electric energy stored in the energy storage unit to allow the energy storage unit to provide electric energy to the heating element includes the following operation: detecting any one parameter of the voltage, the energy, and the capacity of the energy storage unit, and controlling the charging unit to charge the energy storage unit based on the voltage, the energy, or the capacity of the energy storage unit.

In some embodiments, the detecting any one parameter of the voltage, the energy, and the capacity of the energy storage unit, and controlling the charging unit to charge the energy storage unit based on the voltage, the energy or the capacity of the energy storage unit includes the following operation: controlling the charging unit to charge the energy storage unit based on the voltage of the energy storage unit within a first preset time period; or controlling the charging unit to charge the energy storage unit based on the energy of the energy storage unit within a second preset time period; or controlling the charging unit to charge the energy storage unit based on the capacity of the energy storage unit within a third preset time period.

In some embodiments, the detecting any one parameter of the voltage, the energy, and the capacity of the energy storage unit, and controlling the charging unit to charge the energy storage unit based on the voltage, the energy, or the capacity of the energy storage unit includes the following operations: controlling the charging unit to charge the energy storage unit based on the voltage of the energy storage unit within a first preset energy interval; or controlling the charging unit to charge the energy storage unit based on the energy of the energy storage unit within a second preset energy interval; or controlling the charging unit to charge the energy storage unit based on the capacity of the energy storage unit within a third preset energy interval.

In some embodiments, the detecting any one parameter of the voltage, the energy, and the capacity of the energy storage unit, and controlling the charging unit to charge the energy storage unit based on the voltage, the energy, or the capacity of the energy storage unit includes the following operations: controlling the charging unit to charge the energy storage unit based on the voltage of the energy storage unit within a first preset charge amount interval; or controlling the charging unit to charge the energy storage unit based on the energy of the energy storage unit within a second preset charge amount interval; or controlling the charging unit to charge the energy storage unit based on the capacity of the energy storage unit within a third preset charge amount interval.

In order to solve the above problem, a third technical solution provided by the present disclosure is an electronic device. The electronic device includes a memory and a processor. The memory stores program instructions and the processor retrieves the program instructions from the memory to execute the control method according to any one of claims 11-15.

In order to solve the above problem, a fourth technical solution provided by the present disclosure is a computer-readable storage medium. The computer-readable storage medium stores a program file. The program file is able to be executed to implement the control method described above.

The beneficial effect of the present disclosure is different from the prior art. The energy storage unit in the aerosol-generating device of present disclosure replaces the lithium battery to power the heating element, improving the safety of power supply. The control unit controls the charging unit to charge the energy storage unit by detecting any one parameter of the voltage, the energy, and the capacity of the energy storage unit, which to some extent reduces the charging time.

### BRIEF DESCRIPTION OF THE DRAWINGS

In order to more clearly illustrate the technical solutions in the embodiments of the present disclosure, the drawings needed to be used in the description of the embodiments will be briefly introduced below. Obviously, the drawings in the following description are only some embodiments of the present disclosure. For those of ordinary skill in the art, other drawings may also be obtained based on these drawings without exerting creative efforts.
FIG. 1 is a schematic view of functional modules of a first embodiment according to the present disclosure.
FIG. 2 is schematic view of functional modules of a second embodiment according to the present disclosure.
FIG. 3 is a schematic view of functional modules of a third embodiment according to the present disclosure.
FIG. 4 is a schematic view of functional modules of a fourth embodiment according to the present disclosure.
FIG. 5 is a schematic structural view of components of an aerosol-generating device according to the present disclosure.
FIG. 6 is a flow chart of a control method of an aerosol-generating device of the present disclosure.
FIG. 7 is a schematic structural view of an electronic device according to an embodiment of the present disclosure.
FIG. 8 is a schematic structural view of a computer-readable storage medium of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments of the present disclosure, all other embodiments obtained by those of ordinary skill in the art without creative efforts fall within the protection scope of the present disclosure.

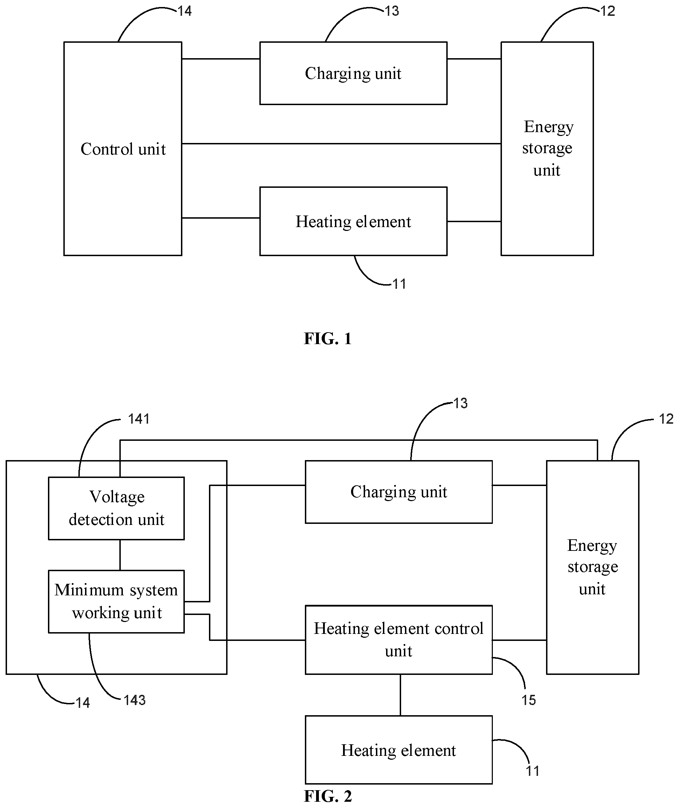

As illustrated in FIG. 1, which is a schematic view of functional modules of an aerosol-generating device according to a first embodiment of the present disclosure. The aerosol-generating device includes a heating element 11, at least one energy storage unit 12 and a control unit 14. In some embodiments, the heating element 11 is connected to the control unit 14 and the energy storage unit 12, the energy storage unit 12 is connected to a charging unit 13, and the charging unit 13 is connected to the control unit 14. The energy storage unit 12 provides electric energy to the heating element 11 to allow the heating element 11 to heat the aerosol-forming substrate for forming aerosol. The control unit 14 detects the electric energy stored in the energy storage unit 12 and controls the charging unit 13 to charge the energy storage unit 12 based on the electric energy stored in the energy storage unit 12.

In some embodiments, the control unit 14 detects any one parameter of the voltage, the energy, and the capacity of the energy storage unit 12, and controls the charging unit 13 to charge the energy storage unit 12 based on the voltage, the energy, or the capacity of the energy storage unit 12.

In some embodiments, the control unit 14 controls the charging unit 13 to charge the energy storage unit 12 based on the voltage of the energy storage unit 12 within a first time period. The charging unit 13 is configured to apply a constant current charging mode and charges the energy storage unit 12 based on the constant current charging mode within the first preset time period.

It may be understood that the control unit 14 detects the voltage of the energy storage unit 12. After determining the voltage of the energy storage unit 12, the charging unit 13 is configured to apply the constant current charging mode. After that, the control unit 14 controls the charging unit 13 to charge the energy storage unit 12 within the first time period, and the first time period is the time required for the voltage detected by the energy storage unit 12 to reach the rated voltage of the energy storage unit 12. For example, in practical applications, the energy storage unit 12 may be a hybrid capacitor, and a 250mAh hybrid capacitor is selected. After detecting that the voltage of the hybrid capacitor is 2.5V, the control unit 14 controls the charging unit 13 to charge at a constant current of 200mA, and continue to charge the hybrid capacitor until the charging time reaches one hour.

In some embodiments, the control unit 14 controls the charging unit 13 to charge the energy storage unit 12 based on the energy of the energy storage unit 12 within a second preset time period. Within the second preset time period, the charging unit 13 is configured to apply the constant current charging mode, and charges the energy storage unit 12 based on the constant current charging mode.

It may be understood that the control unit 14 detects the energy of the energy storage unit 12. After determining the energy of the energy storage unit 12, the charging unit 13 is configured to apply the constant current charging mode. After that, the control unit 14 controls the charging unit 13 to charge the energy storage unit 12 within the second time period, and the second time period is the time required for the energy detected by the energy storage unit 12 to reach the rated energy of the energy storage unit 12. For example, in practical applications, the energy storage unit 12 may be a hybrid capacitor, and a 200mAh hybrid capacitor is selected. After detecting that the energy of the hybrid capacitor is 0 Wh, the control unit 14 controls the charging unit 13 to charge at a constant current of 200mA, and continue to charge the hybrid capacitor until the charging time reaches one hour.

In some embodiments, the control unit 14 controls the charging unit 13 to charge the energy storage unit 12 based on the capacity of the energy storage unit 12 within a third preset time period. Within the third preset time period, the charging unit 13 is configured to apply the constant current charging mode, and charges the energy storage unit 12 based on the constant current charging mode.

It may be understood that the control unit 14 detects the capacity of the energy storage unit 12. After determining the capacity of the energy storage unit 12, the charging unit 13 is configured to apply the constant current charging mode. After that, the control unit 14 controls the charging unit 13 to charge the energy storage unit 12 within the third time period, and the third time period is the time required for the detected capacity of the energy storage unit 12 to reach the rated capacity of the energy storage unit 12. For example, in practical applications, the energy storage unit 12 may be a hybrid capacitor, and a 200mAh hybrid capacitor is selected. After detecting that the energy of the hybrid capacitor is 0 Wh, the control unit 14 controls the charging unit 13 to charge the hybrid capacitor at a constant current of 200mA, and then stop charging when the charging time reaches one hour.

The numerical values of the first preset time period, the second preset time period and the third preset time period may be the same or different.

In some embodiments, the control unit 14 controls the charging unit 13 to charge the energy storage unit 12 based on the voltage of the energy storage unit 12 within a first preset energy interval.

It may be understood that the control unit 14 detects the voltage of the energy storage unit 12. After determining the voltage of the energy storage unit 12, the control unit 14 controls the charging unit 13 to charge the energy storage unit 12 within the first preset energy interval according to the voltage of the energy storage unit 12, until the energy of the energy storage unit 12 reaches a predetermined energy. The first preset energy interval ranges from the energy stored before the energy storage unit 12 is charged, to the predetermined energy of the energy storage unit 12. For example, in practical applications, the energy storage unit 12 may be a hybrid capacitor, and a 200mAh hybrid capacitor is selected. After detecting that the voltage of the hybrid capacitor is 2.5V, the control unit 14 controls the charging unit 13 to charge the hybrid capacitor at a charging current of 200mA, and then stop charging when the energy of the hybrid capacitor reaches 0.6Wh.

In some embodiments, the control unit 14 controls the charging unit 13 to charge the energy storage unit 12 based on the energy of the energy storage unit 12 within a second preset energy interval.

It may be understood that the control unit 14 detects the energy of the energy storage unit 12. After determining the energy of the energy storage unit 12, the control unit 14 controls the charging unit 13 to charge the energy storage unit 12 within the second preset energy interval according to the energy of the energy storage unit 12, until the energy of the energy storage unit 12 reaches a predetermined energy. The second preset energy interval ranges from the energy stored before the energy storage unit 12 is charged, to the predetermined energy of the energy storage unit 12. For example, in practical applications, the energy storage unit 12 may be a hybrid capacitor, and a 200mAh hybrid capacitor is selected. After detecting that the energy of the hybrid capacitor is 0Wh, the control unit 14 controls the charging unit 13 to charge the hybrid capacitor at a charging current of 200mA, and then stop charging when the energy of the hybrid capacitor reaches 0.6Wh.

In some embodiments, the control unit 14 controls the charging unit 13 to charge the energy storage unit 12 within a third preset energy interval based on the capacity of the energy storage unit 12.

It may be understood that the control unit 14 detects the capacity of the energy storage unit 12. After determining the capacity of the energy storage unit 12, the control unit 14 controls the charging unit 13 to charge the energy storage unit 12 within the third preset energy interval based on the capacity of the energy storage unit 12, until the energy of the energy storage unit 12 reaches a predetermined energy. The third preset energy interval is ranges from the energy stored before the energy storage unit 12 is charged, to the predetermined energy of the energy storage unit 12. For example, in practical applications, the energy storage unit 12 may be a hybrid capacitor, and a 200mAh hybrid capacitor is selected. After detecting that the capacity of the hybrid capacitor is 0mAh, the control unit 14 controls the charging unit 13 to charge the hybrid capacitor at a charging current of 200mA, and then stop charging when the energy of the hybrid capacitor reaches 0.6Wh.

The numerical intervals of the first preset energy interval, the second preset energy interval and the third preset energy interval may be the same or different.

In some embodiments, in an embodiment, the control unit 14 controls the charging unit 13 to charge the energy storage unit 12 based on the voltage of the energy storage unit 12 within a first preset charge amount interval.

It may be understood that the control unit 14 detects the voltage of the energy storage unit 12, and after determining the voltage of the energy storage unit 12, the control unit 14 controls the charging unit 13 to charge the energy storage unit 12 within the first preset charge amount interval based on the voltage of the energy storage unit 12, until the charge amount of the energy storage unit 12 reaches a predetermined charge amount. The first preset charge amount interval ranges from the charge amount stored in the energy storage unit 12 before charging, to the predetermined charge amount of the energy storage unit 12. For example, in practical applications, the energy storage unit 12 may be a hybrid capacitor, and a 200mAh hybrid capacitor is selected. After the control unit 14 detects that the voltage of the hybrid capacitor is 2.5V, the control unit 14 controls the charging unit 13 to charge the hybrid capacitor when the charging current is 200mA, and then stop charging when the charge amount of the hybrid capacitor reaches the predetermined charge amount 720C.

In some embodiments, in an embodiment, the control unit 14 controls the charging unit 13 to charge the energy storage unit 12 within the second preset charge amount interval based on the energy of the energy storage unit 12.

It may be understood that the control unit 14 detects the energy of the energy storage unit 12. After determining the energy of the energy storage unit 12, the control unit 14 controls the charging unit 13 within the second preset charge amount interval based on the energy of the energy storage unit 12, until the charge amount of the energy storage unit 12 reaches a predetermined charge amount. The second preset charge amount interval ranges from the charge amount stored in the energy storage unit 12 before being charged, to the predetermined charge amount of the energy storage unit 12. For example, in practical applications, the energy storage unit 12 may be a hybrid capacitor, and a 200mAh hybrid capacitor is selected. After detecting that the energy of the hybrid capacitor is 0Wh, the control unit 14 controls the charging unit 13 to charge the hybrid capacitor at a charging current of 200mA, then stop charging when the charge amount of the hybrid capacitor reaches the predetermined charge amount 720C.

In some embodiments, the control unit 14 controls the charging unit 13 to charge the energy storage unit 12 within a third preset charge amount interval based on the capacity of the energy storage unit 12.

It may be understood that the control unit 14 detects the capacity of the energy storage unit 12. After determining the capacity of the energy storage unit 12, the control unit 14 controls the charging unit 13 to charge the energy storage unit 12 within the third preset charge amount interval based on the capacity of the energy storage unit 12, until the charge amount of the energy storage unit 12 reaches a predetermined charge amount. The third preset charge amount ranges from the charge amount stored in the energy storage unit 12 before being charged, to the predetermined charge amount of the energy storage unit 12. For example, in practical applications, the energy storage unit 12 may be a hybrid capacitor, and a 200mAh hybrid capacitor is selected. After detecting that the energy of the hybrid capacity is 0mAh, the control unit 14 controls the charging unit 13 to charge the hybrid capacitor at a charging current of 200mA, and then stop charging when the charge amount of the hybrid capacitor reaches the predetermined charge amount 720C.

The numerical values of the first preset charge amount interval, the second preset charge amount interval and the third preset charge amount interval may be the same or different.

In some embodiments, the charging unit 13 is configured to apply the constant current charging mode, the control unit 14 detects any one parameter of the voltage, the energy, and the capacity of the energy storage unit 12, and controls the charging unit 13 to charge the energy storage unit 12 based on the detected voltage, the detected energy, or the detected capacity, such that the voltage of the energy storage unit 12 reaches the preset voltage value.

It may be understood that, for example, in practical applications, the energy storage unit 12 may be a hybrid capacitor, and a 200mAh hybrid capacitor is selected. The control unit 14 controls the charging unit 13 to charge the energy storage unit 12 at a constant charging current of 200 mA based on the detected voltage, the detected energy, or the detected capacity, then stop charging when the voltage of the hybrid capacitor reaches 4.15V

In some embodiments, the voltage of the energy storage unit 12 reaches a preset voltage value, the charging unit 13 is configured to apply the constant voltage charging mode, and the control unit 14 controls the charging unit 13 to charge the energy storage unit 12 based on the detected energy or the detected capacity, such that the charging current of the charging unit 13 reaches the preset charging current.

It may be understood that, for example, in practical applications, the energy storage unit 12 may be a hybrid capacitor, and a 200mAh hybrid capacitor is selected. The control unit 14 controls the charging unit 13 to charge the energy storage unit 12 at a constant current of 200mA based on the detected voltage, the detected energy, or the detected capacity, until the voltage of the hybrid capacitor reaches 4.15V. Then, the hybrid capacitor is continued to be charged at a constant voltage of 4.15 V, and until the charging current of the charging unit 13 reaches 10mA.

As illustrated in FIG. 2, which is a schematic view of functional modules of an aerosol-generating device according to a second embodiment of the present disclosure. The aerosol-generating device includes a heating element 11, a heating element control unit 15, at least one energy storage unit 12, and a control unit 14. The control unit 14 includes a minimum system working unit 143 and a voltage detection unit 141. The voltage detection unit 141 is connected to the minimum system working unit 143.

In some embodiments, the heating element 11 is connected to the heating element control unit 15. The heating element control unit 15 is connected to the minimum system working unit 143 and the energy storage unit 12. The energy storage unit 12 is connected to the charging unit 13 and the voltage detection unit 141. The charging unit 13 is connected to the minimum system working unit 143. The energy storage unit 12 supplies power to the heating element 11 through the heating element control unit 15, such that the heating element 11 heats the aerosol-forming substrate for forming aerosol. The heating element control unit 15 controls the start and stop of the heating element 11. The minimum system working unit 143 detects the electric energy stored in the energy storage unit 12 through the voltage detection unit 141 and controls the charging unit 13 to charge the energy storage unit 12 based on the voltage of the energy storage unit 12.

In some embodiments, the charging unit 13 is configured to apply the constant current charging mode, the control unit 14 detects the voltage of the energy storage unit 12, and charges the energy storage unit 12 based on the detected voltage, such that the voltage of the energy storage unit 12 reaches the preset voltage value.

It may be understood that the voltage detection unit 141 of the control unit 14 detects the voltage of the energy storage unit 12, and the minimum system working unit 143 of the control unit 14 controls the charging unit 13 to charge the energy storage unit 12 based on the voltage of the energy storage unit 12 until the voltage of the energy unit 12 reaches the preset voltage value. For example, in practical applications, the energy storage unit 12 may be a hybrid capacitor, and a 200mAh hybrid capacitor is selected. The control unit 14 controls the charging unit 13 to charge the energy storage unit 12 at a constant current charging current of 200mA based on the detected voltage of the energy storage unit 12, then stops charging when the voltage of the hybrid capacitor reaches 4.15V

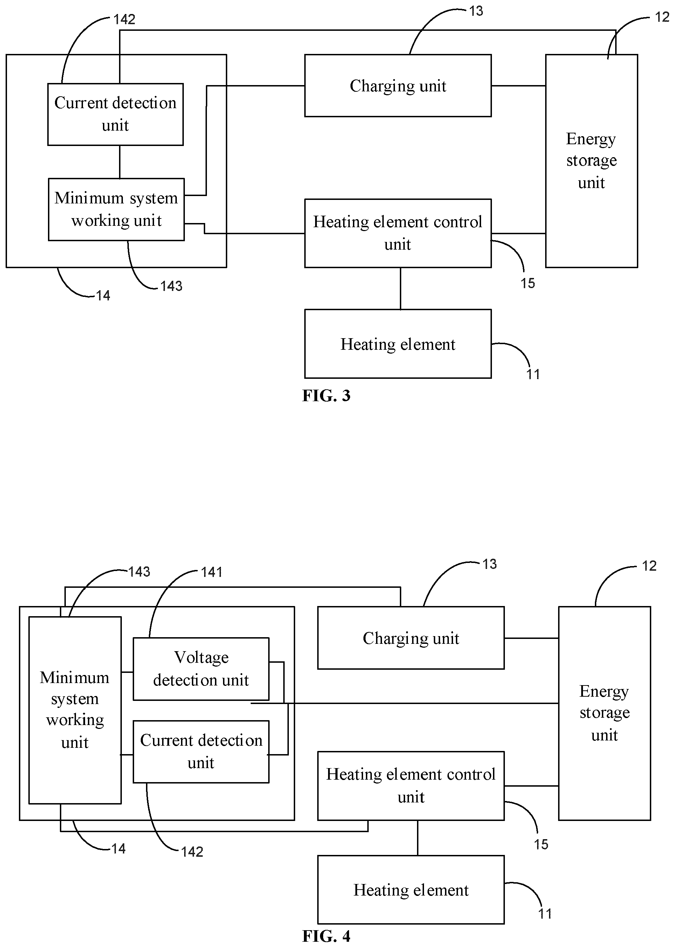

As illustrated in FIG. 3, which is a schematic view of functional modules of an aerosol-generating device according to a third embodiment of the present disclosure. The aerosol-generating device includes a heating element 11, a heating element control unit 15, at least one energy storage unit 12 and a control unit 14. The control unit 14 includes a minimum system working unit 143 and a current detection unit 142. The current detection unit 142 is connected to the minimum system working unit 143.

In some embodiments, the heating element 11 is connected to the heating element control unit 15. The heating element control unit 15 is connected to the minimum system working unit 143 and the energy storage unit 12. The energy storage unit 12 is connected to the charging unit 13 and the current detection unit 142. The charging unit 13 is connected to the minimum system working unit 143. The energy storage unit 12 supplies power to the heating element 11 through the heating element control unit 15 to allow the heating element 11 to heat the aerosol-forming substrate for forming aerosol. The heating element control unit 15 controls the start and stop of the heating element 11. The minimum system working unit 143 detects the electric energy stored in the energy storage unit 12 through the current detection unit 142 and controls the charging unit 13 to charge the energy storage unit 12 based on the energy or the capacity of the energy storage unit 12.

In some embodiments, the charging unit 13 is configured to apply the constant current charging mode. The minimum system working unit 143 detects the energy in the energy storage unit 12 through the current detection unit 142, and charges the energy storage unit 12 based on the detected energy, such that the energy of the energy storage unit 12 reaches a preset value.

In some embodiments, the charging unit 13 is configured to apply the constant current charging mode. The minimum system working unit 143 detects the capacity of the energy storage unit 12 through the current detection unit 142, and charges the energy storage unit 12 based on the detected capacity, such that the charge amount of the energy storage unit 12 reaches a preset value.

As illustrated in FIG. 4, which is a schematic view of functional modules of an aerosol-generating device according to a fourth embodiment of the present disclosure. The aerosol-generating device includes a heating element 11, a heating element control unit 15, at least one energy storage unit 12 and a control unit 14. The control unit 14 includes a minimum system working unit 143, a voltage detection unit 141 and a current detection unit 142. The voltage detection unit 141 and the current detection unit 142 are respectively connected to the minimum system working unit 143.

In some embodiments, the heating element 11 is connected to the heating element control unit 15. The heating element control unit 15 is connected to the minimum system working unit 143 and the energy storage unit 12. The energy storage unit 12 is connected to the charging unit 13, the voltage detection unit 141 and the current detection unit 142. The charging unit 13 is connected to the minimum system working unit 143. The energy storage unit 12 supplies power to the heating element 11 through the heating element control unit 15 to allow the heating element 11 to heat the aerosol-forming substrate for forming aerosol. The heating element control unit 15 controls the start and stop of the heating element 11. The minimum system working unit 143 detects the electric energy stored in the energy storage unit 12 through the voltage detection unit 141 and the current detection unit 142, and control the charging unit 13 to charge the energy storage unit 12 based on any one parameter of the voltage, the energy or the capacity of the energy storage unit 12.

In some embodiments, the charging unit 13 is configured to apply the constant current charging mode. The control unit 14 detects the voltage of the energy storage unit 12 through the voltage detection unit 141, and controls the charging unit 13 to charge the energy storage unit 12 based on the detected voltage, such that the voltage of the energy storage unit 12 reaches a preset voltage value.

In some embodiments, the voltage of the energy storage unit 12 reaches the preset voltage value. The charging unit 13 is configured to apply the constant voltage charging mode. The control unit 14 controls the charging unit 13 to charge the energy storage unit 12 based on the energy or the capacity detected by the current detection unit 142, such that the charging current of the charging unit 13 reaches a preset charging current.

It may be understood that, for example, in practical applications, the energy storage unit 12 may be a hybrid capacitor, and a 200mAh hybrid capacitor is selected. Based on the detected voltage, the control unit 14 controls the charging unit 13 to charge the energy storage unit 12 at a constant charging current of 200mA until the voltage of the hybrid capacitor reaches 4.15V. After that, the control unit 14 controls the charging unit 13 to continue to charge the hybrid capacitor at a constant voltage of 4.15 V, and then stop charging when the charging current of the charging unit 13 reaches 10mA.

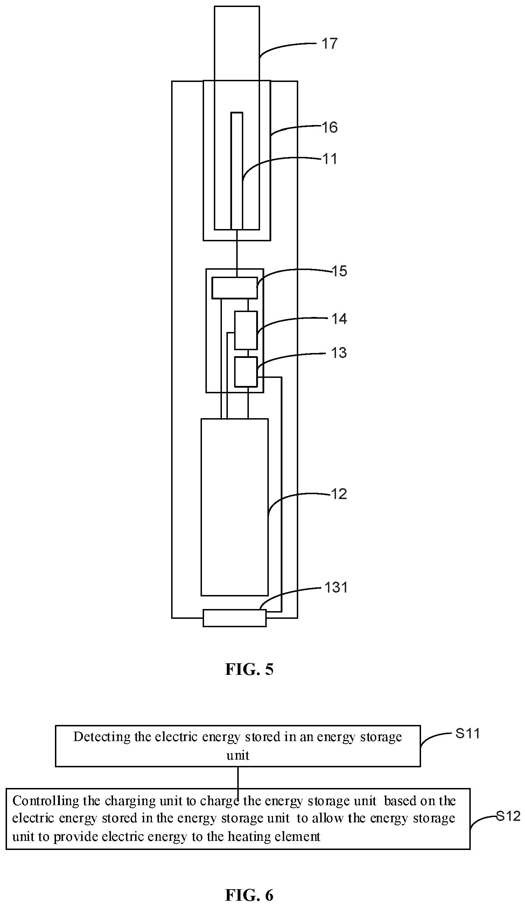

As illustrated in FIG. 5, which is a structural schematic view of components of an aerosol-generating device according to the present disclosure.

The aerosol-generating device includes an accommodation cavity 16, a heating element 11, a heating element control unit 15, a charging unit 13, an energy storage unit 12 and a control unit 14. The charging unit 13 includes a charging unit external interface 131.

In some embodiments, the heating element 11 is arranged in the accommodation cavity 16, and an aerosol-forming substrate 17 is placed in the accommodation cavity 16. The heating element 11 is connected to the heating element control unit 15. The heating element control unit 15 is connected to the control unit 14 and the energy storage unit 12. The energy storage unit 12 is connected to the charging unit 13, and the charging unit 13 is connected to the control unit 14. The energy storage unit 12 supplies power to the heating element 11. The heating element control unit 15 controls the start and stop of the heating element 11 under the control of the control unit 14. When started, the heating element 11 heats the aerosol-forming substrate for forming aerosol, and the charging unit 13 charge the energy storage unit 12 by connecting an external power supply through the charging unit external interface.

As illustrated in FIG. 6, which is a flow chart of a control method for an aerosol-generating device according to the present disclosure. The control method for the aerosol-generating device includes the following operations.

Operation S 11: detecting the electric energy stored in an energy storage unit 12.

It may be understood that the aerosol-generating device includes a heating element 11, an energy storage unit 12 and a charging unit 13. The energy storage unit 12 provides electrical energy to the heating element 11 to allow the heating element 11 to heat the aerosol-forming substrate for forming aerosol. The charging unit 13 is connected an external power supply to charge the energy storage unit 12. Before charging, the energy storage unit 12 is tested to obtain the electric energy stored in the energy storage unit 12.

Operation S12: controlling the charging unit 13 to charge the energy storage unit 12 based on the electric energy stored in the energy storage unit 12 to allow the energy storage unit 12 to provide electric energy to the heating element 11.

It may be understood that controlling the charging unit 13 to charge the energy storage unit 12 based on the electric energy stored in the energy storage unit 12 to allow the energy storage unit 12 to provide electric energy to the heating element 11 may specifically include: detecting any one parameter of the voltage, the energy and the energy of the energy storage unit 12, and controlling the charging unit 13 to charge the energy storage unit 12 based on the voltage, the energy or the capacity of the energy storage unit 12.

In some embodiments, the charging unit 13 is controlled to charge the energy storage unit 12 within a first time period based on the voltage of the energy storage unit 12. Within the first preset time period, the charging unit 13 may be configured to apply the constant current charging mode, and charge the energy storage unit 12 based on the constant current charging mode.

In an embodiment, the charging unit 13 is controlled to charge the energy storage unit 12 based on the energy of the energy storage unit 12 within a second preset time period. Within the second preset time period, the charging unit 13 may be configured to apply the constant current charging mode, and charge the energy storage unit 12 based on the constant current charging mode.

In another embodiment, the charging unit 13 is controlled to charge the energy storage unit 12 based on the capacity of the energy storage unit 12 within a third preset time period. Within the third preset time period, the charging unit 13 is configured to apply the constant current charging mode, and charge the energy storage unit 12 based on the constant current charging mode.

The numerical values of the first preset time period, the second preset time period and the third preset time period may be the same or different.

In some embodiments, the charging unit 13 is controlled to charge the energy storage unit 12 within a first preset energy interval based on the voltage of the energy storage unit 12.

In an embodiment, the charging unit 13 is controlled to charge the energy storage unit 12 within a second preset energy interval based on the energy of the energy storage unit 12.

In another embodiment, the charging unit 13 is controlled to charge the energy storage unit 12 within a third preset energy interval based on the energy of the energy storage unit 12.

The numerical intervals of the first preset energy interval, the second preset energy interval and the third preset energy interval may be the same or different.

In some embodiments, the charging unit 13 is controlled to charge the energy storage unit 12 within a first preset charge amount interval based on the voltage of the energy storage unit 12.

In an embodiment, the charging unit 13 is controlled to charge the energy storage unit 12 within a second preset charge amount interval based on the energy of the energy storage unit 12.

In another embodiment, the charging unit 13 is controlled to charge the energy storage unit 12 within a third preset charge amount interval based on the capacity of the energy storage unit 12.

The numerical intervals of the first preset charge amount interval, the second preset charge amount interval and the third preset charge amount interval may be the same or different.

The control method for the aerosol-generating device of the present disclosure detects any one parameter of the voltage, the energy and the capacity stored in the energy storage unit 12 and controls the charging unit 13 to charge the energy storage unit 12 based on the voltage, the energy, or the capacity of the energy storage unit 12. Therefore, it is able to reduce the charging time of the aerosol-generating device to a certain extent. In addition, the energy storage unit 12 is adopted to replace the lithium-ion battery to power the heating element 11, which has the advantage of high safety and long life.

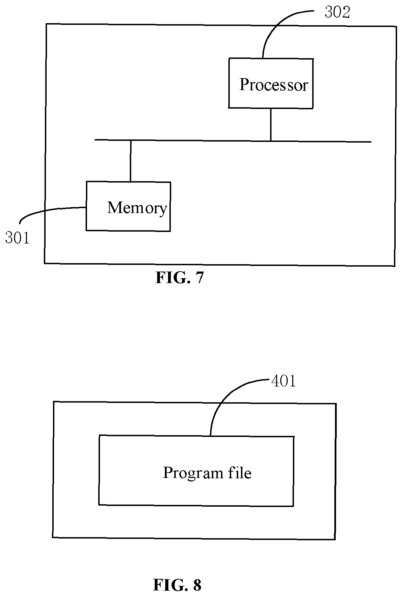

As illustrated in FIG. 7, which is a schematic structural view of an electronic device according to an embodiment of the present disclosure. The electronic device includes a memory 301 and a processor 302 interconnected to each other.

The memory 301 is configured to store program instructions for implementing any one of the above methods for any one of the devices.

The processor 302 is configured to execute the program instructions stored in the memory 301.

The processor 302 may also be called a CPU (Central Processing Unit). The processor 302 may be an integrated circuit chip with signal processing capabilities. The processor 302 may also be a general-purpose processor, a digital signal processor (DSP), an application specific integrated circuit (ASIC), a field programmable gate array (FPGA) or another programmable logic device, a discrete gate or a transistor logic device, or a discrete hardware component. A general-purpose processor may be a microprocessor or any conventional processor, etc.

The memory 301 may be a memory stick, a TF card, etc., and may store all information in the electronic device, including input raw data, computer programs, intermediate operation results, and final operation results, all of which are stored in the memory. It stores and retrieves information based on a location specified by the controller. The electronic device may have a memory function and ensure normal operation due to the memory. The memory of the electronic device may be classified as main memory (internal memory) and auxiliary memory (external memory) according to its purpose, or as external memory and internal memory by other classification methods. The external memory is usually magnetic media or optical disk, which may store information for a long time. The internal memory refers to a storage component on the motherboard, which is configured to store data and programs currently being executed, but is only configured to temporarily store programs and data. When the power is turned off, the data will be lost.

In the several embodiments provided in the present disclosure, it may be understood that the disclosed methods and devices may be implemented in other ways. For example, the device implementation described above is only illustrative. For example, the division of modules or units is only a logical function division. In actual implementation, there may be other division methods, for example, multiple units or components may be combined or may be integrated into another system, or some features may be ignored, or not implemented. On the other hand, the coupling or direct coupling or communication connection between each other shown or discussed may be implemented through some interfaces, and the indirect coupling or communication connection of the devices or units may be implemented in electrical, mechanical or other forms.

A unit described as a separate component may or may not be physically separate. A component shown as a unit may or may not be a physical unit, that is, it may be located in one place, or it may be distributed to multiple network units. Some or all of the units may be selected according to actual needs to achieve the purpose of the present embodiment.

In addition, each functional unit in various embodiments of the present disclosure may be integrated into one processing unit, or each unit may exist physically alone, or two or more units may be integrated into one unit. The above integrated units may be implemented in the form of hardware or software functional units.

An integrated unit may be stored in a computer-readable storage medium if it is implemented in the form of a software functional unit and sold or used as an independent product. Based on this understanding, the technical solution of the present disclosure is essentially or contributes to the existing technology, or all or part of the technical solution may be embodied in the form of a software product. The computer software product is stored in a storage medium, which includes a number of instructions to cause a computer device (which may be a personal computer, a system server, or a network device, etc.) or a processor to execute all or part of the operations of the various implementation methods of the present disclosure.

As illustrated in FIG. 8, which is a schematic structural diagram of a computer-readable storage medium of the present disclosure. The storage medium of the present disclosure stores a program file 401 which may implement all the above methods. The program file 401 may be stored in the above-mentioned storage media in the form of a software product and include a number of instructions to make a computer device (which may be a personal computer) a computer, a server, or network device, etc.) or a processor to execute all or part of the operations of the methods of each embodiment of the present disclosure. The aforementioned storage device includes: a U disk, a mobile hard disk, a read-only memory (ROM), a random-access memory (RAM), and other media that may store program codes, or a computer, a server, a mobile phone, a tablet and other terminal devices.

The above are only embodiments of the present disclosure, and do not limit the protection scope of the present disclosure. Any equivalent structure or equivalent process transformation made using the contents of the description and drawings of the present disclosure, or directly or indirectly applied in other related technical fields, are similarly included in the protection scope of the present disclosure.

## Claims

1. An aerosol-generating device, comprising:
a heating element, configured to heat an aerosol-forming substrate for forming aerosol;
at least one energy storage unit, configured to provide electrical energy to the heating element to power on the heating element to work;
a charging unit, connected to the energy storage unit and configured to connect an external power supply to charge the energy storage unit; and
a control unit, connected to the energy storage unit and the charging unit, and configured to detect the electric energy stored in the energy storage unit and control the charging unit to charge the energy storage unit based on the detected electric energy stored in the energy storage unit.

2. The aerosol-generating device according to claim 1, wherein the control unit detects any one parameter of the voltage, the energy and the capacity of the energy storage unit, and controls the charging unit to charge the energy storage unit based on the voltage, the energy, or the capacity of the energy storage unit.

3. The aerosol-generating device according to claim 2, wherein the control unit controls the charging unit to charge the energy storage unit based on the voltage of the energy storage unit within a first preset time period; or
the control unit controls the charging unit to charge the energy storage unit based on the energy of the energy storage unit within a second preset time period; or
the control unit controls the charging unit to charge the energy storage unit based on the capacity of the energy storage unit within a third preset time period.

4. The aerosol-generating device according to claim 3, wherein the charging unit is configured to apply a constant current charging mode during the first preset time period, the second preset time period and the third preset time period, and is configured to charge the energy storage unit based on the constant current charging mode.

5. The aerosol-generating device according to claim 3, wherein the control unit controls the charging unit to charge the energy storage unit based on the voltage of the energy storage unit within a first preset energy interval; or
the control unit controls the charging unit to charge the energy storage unit based on the energy of the energy storage unit within a second preset energy interval; or
the control unit controls the charging unit to charge the energy storage unit based on the capacity of the energy storage unit within a third preset energy interval.

6. The aerosol-generating device according to claim 5, wherein the control unit controls the charging unit to charge the energy storage unit based on the voltage of the energy storage unit within a first preset charge amount interval; or
the control unit controls the charging unit to charge the energy storage unit based on the energy of the energy storage unit within a second preset charge amount interval; or
the control unit controls the charging unit to charge the energy storage unit based on the capacity of the energy storage unit within a third preset charge amount interval.

7. The aerosol-generating device according to claim 1, wherein the charging unit is configured to apply a constant current charging mode, and the control unit detects any one parameter of the voltage, the energy, and the capacity of the energy storage unit, and controls the charging unit to charge the energy storage unit based on the detected voltage, the detected energy, or the detected capacity such that the voltage of the energy storage unit reaches a preset voltage value.

8. The aerosol-generating device according to claim 7, wherein the charging unit is configured to apply the constant voltage charging mode in response to the voltage of the energy storage unit reaching the preset voltage value, and the control unit controls the charging unit to charge the energy storage unit based on the detected energy, or the detected capacity such that the charging current of the charging unit reaches a preset charging current.

9. The aerosol-generating device according to claim 8, wherein the charging unit comprises:
a charging unit external interface, configured to connect to an external power supply.

10. The aerosol-generating device according to claim 9, wherein the control unit comprises:
a voltage detection unit, connected to the energy storage unit, and configured to detect the voltage of the energy storage unit, such that the control unit controls the charging unit to charge the energy storage unit based on the voltage of the energy storage unit; and /or
a current detection unit, connected to the energy storage unit, and configured to detect the energy or the capacity of the energy storage unit, such that the control unit controls the charging unit to charge the energy storage unit based on the energy or the capacity of the energy storage unit.

11. A control method for an aerosol-generating device, wherein the aerosol-generating device comprises a heating element, an energy storage unit and a charging unit, and the control method comprises:
detecting the electrical energy stored in the energy storage unit; and
controlling the charging unit to charge the energy storage unit based on the electric energy stored in the energy storage unit to allow the energy storage unit to provide electric energy to the heating element.

12. The control method according to claim 11, wherein the controlling the charging unit to charge the energy storage unit based on the electric energy stored in the energy storage unit to allow the energy storage unit to provide electric energy to the heating element comprises:
detecting any one parameter of the voltage, the energy, and the capacity of the energy storage unit, and controlling the charging unit to charge the energy storage unit based on the voltage, the energy, or the capacity of the energy storage unit.

13. The control method according to claim 12, wherein the detecting any one parameter of the voltage, the energy, and the capacity of the energy storage unit, and controlling the charging unit to charge the energy storage unit based on the voltage, the energy or the capacity of the energy storage unit comprises:
controlling the charging unit to charge the energy storage unit based on the voltage of the energy storage unit within a first preset time period; or
controlling the charging unit to charge the energy storage unit based on the energy of the energy storage unit within a second preset time period; or
controlling the charging unit to charge the energy storage unit based on the capacity of the energy storage unit within a third preset time period.

14. The control method according to claim 12, wherein the detecting any one parameter of the voltage, the energy, and the capacity of the energy storage unit, and controlling the charging unit to charge the energy storage unit based on the voltage, the energy, or the capacity of the energy storage unit comprises:
controlling the charging unit to charge the energy storage unit based on the voltage of the energy storage unit within a first preset energy interval; or
controlling the charging unit to charge the energy storage unit based on the energy of the energy storage unit within a second preset energy interval; or
controlling the charging unit to charge the energy storage unit based on the capacity of the energy storage unit within a third preset energy interval.

15. The control method according to claim 12, wherein the detecting any one parameter of the voltage, the energy, and the capacity of the energy storage unit, and controlling the charging unit to charge the energy storage unit based on the voltage, the energy, or the capacity of the energy storage unit comprises:
controlling the charging unit to charge the energy storage unit based on the voltage of the energy storage unit within a first preset charge amount interval; or
controlling the charging unit to charge the energy storage unit based on the energy of the energy storage unit within a second preset charge amount interval; or
controlling the charging unit to charge the energy storage unit based on the capacity of the energy storage unit within a third preset charge amount interval.

16. An electronic device, comprising: a memory and a processor, wherein the memory stores program instructions and the processor retrieves the program instructions from the memory to execute the control method according to any one of claims 11-15.

17. A computer-readable storage medium, storing a program file, wherein the program file is able to be executed to implement the control method according to any one of claims 11-15.
